# EUROPÄISCHE PATENTANMELDUNG

(11) **EP 1 428 605 A1**
(43) Veröffentlichungstag der Anmeldung: **16.06.2004**
(21) Anmeldenummer: 03027935.0
(22) Anmeldetag: 04.12.2003
(51) Int. Cl.: B23K 9/173, B23K 35/38

(54) **Verfahren und Schutzgasgemisch zum Schweissen von Gusseisenwerkstoffen**

(30) Priorität: 13.12.2002 DE 10258237
(71) Anmelder: MESSER GRIESHEIM GmbH, 65933 Frankfurt am Main (DE)
(72) Erfinder: Hildebrandt, Bernd, Dr., 47918 Tönlsvorst (DE); Mehler, Wolfgang, 63697 Hirzenhain (DE)

(57) **Zusammenfassung**

Das erfindungsgemäße MAG-Schweißverfahren mit Schutzgasgemisch zum Schweißen von Gusseisenwerkstoffen ermöglicht einen höheren Mechanisierungsgrad und damit eine höhere Effektivität des Schweißprozesses bei verbesserten Arbeitsbedingungen für das Schweißpersonal.

## Beschreibung

Die Erfindung betrifft ein Verfahren und Schutzgasgemisch zum Schweißen von Gusseisenwerkstoffen.

Das Schweißen von Gusseisenwerkstoffe, insbesondere aus großen Gussteilen, erfolgt bisher sowohl bei Neuanfertigungen als auch bei Reparaturen mittels einer Warm- oder Kalt-Lichtbogenhandschweißung mit Elektrode.

Die üblicherweise bei etwa 650 Grad Celsius durchgeführte Warmschweißung erfordert einen zusätzliche Kosten verursachenden Vorwärmaufwand. Zudem ist ein Schweißen bei derart relativ hohen Temperaturen mit einer zusätzlichen gesundheitlichen Belastung für das Schweißpersonal verbunden. Außerdem sind die mittels Warmschweißung von Gusseisenwerkstoffen erreichbaren Schweißgeschwindigkeiten und damit auch die Effektivität des Schweißprozesses relativ gering.

Der Erfindung liegt die Aufgabe zugrunde, ein Verfahren und ein Schutzgasgemisch zum Schweißen von Gusseisenwerkstoffen zur Verfügung zu stellen, mit denen der Mechanisierungsgrad und damit die Effektivität des Schweißprozesses erhöht sowie die Arbeitsbedingungen für das Schweißpersonal wesentlich verbessert werden können.

Die Aufgabe wird erfindungsgemäß durch den Einsatz des MAG-Schweißverfahrens unter Verwendung eines Schutzgases aus 1 bis 8% Sauerstoff und/oder 1 bis 18% Kohlendioxid, Rest Argon, gelöst.

Das erfindungsgemäß zum Schweißen von Gusseisenwerkstoffe eingesetzte MAG-Schweißen mit einem gussgeeigneten Schweißdraht bzw. einer Fülldrahtelektrode unter Verwendung des erfindungsgemäßen Schutzgasgemisches ermöglicht einen höheren Mechanisierungsgrad und damit eine höhere Effektivität des Schweißprozesses bei wesentlich verbesserten Arbeitsbedingungen für das Schweißpersonal.

Versuchsergebnisse belegen, dass sich mit dem erfindungsgemäßen Schutzgas die Gefügebestandteile optimal einstellenlassen.

## Patentansprüche

1. Verfahren zum Schweißen von Gusseisenwerkstoffen, **dadurch gekennzeichnet, daß** MAG-Schweißen eingesetzt wird.

2. Schutzgasgemisch zum MAG-Schweißen von Gusseisenwerkstoffen, **gekennzeichnet durch** einen Volumenanteil von 1 bis 8% Sauerstoff, Rest Argon.

3. Schutzgasgemisch zum MAG-Schweißen von Gusseisenwerkstoffen, **gekennzeichnet durch** einen Volumenanteil von 1 bis 18% Kohlendioxid, Rest Argon.

4. Schutzgasgemisch zum MAG-Schweißen von Gusseisenwerkstoffen, **gekennzeichnet durch** einen Volumenanteil von 1 bis 8% Sauerstoff und 1 bis 18% Kohlendioxid, Rest Argon.
